# EUROPEAN PATENT APPLICATION

(11) **EP 3 136 817 A1**
(43) Date of publication of application: **01.03.2017**
(21) Application number: 14890303.2
(22) Date of filing: 22.04.2014
(51) Int. Cl.: H04W 92/18, H04W 72/04

(54) **WIRELESS TERMINAL, WIRELESS STATION, WIRELESS COMMUNICATION SYSTEM, AND WIRELESS COMMUNICATION METHOD**

(71) Applicant: Fujitsu Limited, Kawasaki-shi, Kanagawa 211-8588 (JP)
(72) Inventor: KAWASAKI, Yoshihiro, Kawasaki-shi Kanagawa 211-8588 (JP)
(74) Representative: Lewin, David Nicholas
(86) International application number: PCT/JP2014/002266
(87) International publication number: WO 2015/162640

(57) **Abstract**

An object of the disclosed technology is to provide a wireless terminal, a wireless station, a wireless communication system, and a wireless communication method, in all of which efficient inter-terminal communication can be realized.

The disclosed wireless terminal includes a wireless terminal including: a wireless communication unit that performs uplink transmission to a wireless station using a predetermined frequency band; and a control unit that receives from the wireless station a signal indicating a timing at which the uplink transmission is discontinuously performed between when the wireless terminal starts and ends inter-terminal communication with another wireless terminal, and that controls the wireless communication unit in such a manner that the inter-terminal communication and the uplink transmission are performed in a time-division manner based on the signal, using a frequency band that is allocated for the inter-terminal communication within the predetermined frequency band.

## Description

### FIELD

The present invention relates to a wireless terminal, a wireless station, a wireless communication system, and a wireless communication method.

### BACKGROUND

In recent years, a discussion on next generation wireless communication technologies has been performed to further enhance high-speed and high-capacity wireless communication, and the like in a wireless communication system such as a portable phone system (cellular system). For example, communication standards called Long Term Evolution (LTE) and communication standards called LTE-Advanced (LTE-A) that is based on an LTE radio communication technology have been proposed by 3rd Generation Partnership Project (3GPP) that is a standard body.

Recent communication standards that have been completed in 3GPP are Release 11 that corresponds to LTE-A. Currently, a discussion on important parts of Release 12 that is a further enhancement version of Release 11 has been performed, and details are going to be edited toward completion of Release 12. "LTE" is hereinafter defined as including other wireless communication systems that are enhancement versions of LTE, as well as LTE and LTE-A, unless otherwise specified.

LTE (LTE-A) includes various technologies, one of which is device to device (D2D). The D2D is so-called inter-terminal communication in 3GPP. In LTE, normally, although wireless terminals are located a short distance away from one another, communication is performed through a base station. In contrast, according to the D2D, wireless terminals can perform direct communication not through the base station.

According to the D2D, it is possible that communication is performed among wireless terminals even in a case where the communication through the base station is not performed, for example, such as when a disaster occurs. Furthermore, it is considered that the D2D promisingly finds applications in Machine Type Communication (MTC) as well that is equivalent to so-called Machine to Machine (M2M) communication in 3GPP.

On the other hand, according to the D2D, it is possible that the communication is performed among the wireless terminals without using a radio resource that is managed or controlled by the base station. Furthermore, normally, relatively many radio resources are desired in order to use a Modulation Coding Scheme (MCS) that is more resistant to an error in a case where the wireless terminal is located at the boundary of a cell, but a case where this problem is alleviated by applying the inter-terminal communication is also assumed. Because of this, the D2D also receives a lot of attention from the perspective of efficient usage of the radio resource, suppression of a processing load on the base station, or the like.

In 3GPP, feasibility of the D2D, technologies that are desired to realize the D2D, performance that is expected, and the like have been discussed. For example, several basic schemes for D2D communication that is introduced in LTE are determined, such as a scheme in which an uplink frequency band or an uplink subframe that is used for so-called cellular communication between a terminal and a base station is used. Furthermore, Proximity Services (ProSe) have been discussed that are broad concepts for the D2D, a service or application that is involved in the D2D, or the like. Because it is considered that the D2D is a technology that has applications in too many fields, the D2D will expectedly continue to be actively discussed as a promising technology in the future in 3GPP.

### Citation List

### Non Patent Literature

NPL 1: "Feasibility study for Proximity Services (Prose)", 3GPP TR 22.803, March 2013
NPL 2: "Study on LTE Device to Device Proximity Services", 3GPP RP-122009, December 2012

### SUMMARY

### Technical Problem

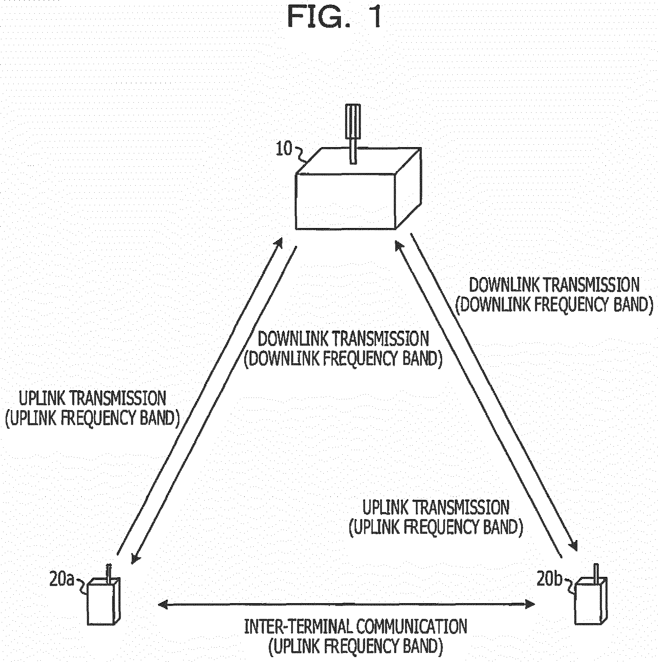

FIG. 1 is a conceptual diagram of inter-terminal communication. FIG. 1 illustrates a base station 10 and two wireless terminals 20a and 20b (moreover, wireless terminals are collectively referred to as a wireless terminal 20). As described above, it is determined that, as illustrated in FIG. 1, the D2D in 3GPP is performed using the uplink frequency band. For this reason, it is difficult for the wireless terminal 20 to perform the D2D and uplink transmission at the same time. In other words, in the uplink frequency band, the wireless terminal 20 performs the D2D and the uplink transmission in a time-division manner.

At this point, in the LTE system, the base station allocates a radio resource to the terminal, and performs transmission and reception of a wireless signal using the radio resource. The radio resource is determined in the time axis direction and the frequency direction. A unit of radio resource allocation in the time axis direction in the LTE system is referred to as a subframe. One subframe is one millisecond long. Furthermore, 10 continuous subframes constitute one frame.

As described above, in the LTE system, in the uplink frequency band, the wireless terminal 20 performs the D2D and the uplink transmission in a time-division manner. For this reason, in a case where the wireless terminal 20 performs the D2D, the wireless terminal 20 performs the D2D in a certain subframe, and performs the uplink transmission in a different subframe, among continuous subframe. In the LTE system, in the uplink frequency band, this is realized by allocating any one of the D2D and the uplink transmission to each subframe. In addition, because the D2D generally is for bidirectional communication, any one of the D2D in one direction of the two directions, the D2D in the other direction, and the uplink transmission can be allocated to each subframe. Several technologies for this subframe allocation (subframe design) are present in the related art.

At this point, the subframe allocation in the related art results from considering efficiency of the entire system in a certain precondition, but as will be described below, with the subframe allocation in the related art, it is difficult to necessarily realize the D2D in an efficient manner. Therefore, in the related art, there is a problem in that the utility of the D2D is lost and as a result, in some cases, the benefit of the D2D is not enjoyed. Moreover, a description that deals with this problem is provided based on the D2D in the LTE system, but the problem is not limited to the LTE system, and it is desirably noted that the same wireless communication system as the LTE system also has the problem described above.

An object of the disclosed technology, which is contrived in view of the problem described above, is to provide a wireless terminal, a wireless station, a wireless communication system, and a wireless communication method, in all of which efficient inter-terminal communication can be realized.

### Solution to Problem

In order to solve the problem described above and accomplish the object, according to the disclosed technology, there is provided a wireless terminal including: a wireless communication unit that performs uplink transmission to a wireless station using a predetermined frequency band; and a control unit that receives a signal indicating a timing at which the uplink transmission is discontinuously performed between when the wireless terminal starts and ends inter-terminal communication with another wireless terminal, and that controls the wireless communication unit in such a manner that the inter-terminal communication and the uplink transmission are performed in a time-division manner based on the signal, using a frequency band that is allocated for the inter-terminal communication within the predetermined frequency band.

### Advantageous Effects of Invention

In a wireless terminal, a wireless station, a wireless communication system, and a wireless communication method according to the aspect of the disclosure, an effect that efficient inter-terminal communication can be realized is achieved.

### BRIEF DESCRIPTION OF DRAWINGS

[FIG. 1] FIG. 1 is a conceptual diagram of inter-terminal communication.
[FIG. 2] FIG. 2 is a diagram illustrating an example of subframe allocation for performing inter-terminal communication relating to the related art.
[FIG. 3] FIG. 3 is a diagram illustrating an example of a sequence that is performed by a wireless communication system according to a first embodiment.
[FIG. 4] FIG. 4 is a diagram illustrating an example of subframe allocation for performing inter-terminal communication according to the first embodiment.
[FIG. 5] FIGs. 5A and 5B are diagrams of a hardware constitution of a wireless communication unit that is included in a wireless terminal.
[FIG. 6] FIG. 6 is a diagram illustrating an example of subframe allocation for performing inter-terminal communication according to a second embodiment.
[FIG. 7] FIG. 7 is a diagram illustrating an example of a network constitution of a wireless communication system according to each embodiment.
[FIG. 8] FIG. 8 is an example of a diagram of a functional constitution of a base station in the wireless communication system according to each embodiment.
[FIG. 9] FIG. 9 is an example of a diagram of a functional constitution of a portable phone terminal in the wireless communication system according to each embodiment.
[FIG. 10] FIG. 10 is an example of a diagram of a hardware constitution of the base station in the wireless communication system according to each embodiment.
[FIG. 11] FIG. 11 is an example of a diagram of a hardware constitution of the portable phone terminal in the wireless communication system according to each embodiment.

### DESCRIPTION OF EMBODIMENTS

Referring to the drawings, a wireless terminal, a wireless station, a wireless communication system, and a wireless communication method according to embodiments of the disclosure will be described below. Moreover, for convenience, descriptions are provided according to individual embodiments, but it goes without saying that combinations of the embodiments can bring out combination effects and an increase in utility.

### [Problem Identification]

As described above, in the related art, there is a problem, such as a problem that efficient inter-terminal communication is difficult to realize. First, identification of the problem in the related art is described before proceeding with a description of each embodiment. The problem was newly found as a result of the inventor's in-depth study on the related art, and it is desirabley noted that the problem had not been known before that.

Generally, in a wireless communication system (in other words, a portable system or a cellular system) in the related art, such as an LTE system, two wireless terminals 20 perform communication with each other through a base station 10 (this communication type is hereinafter referred to as "through-base station communication"). In contrast, in inter-terminal communication, such as D2D in the LTE system, wireless terminals 20 perform direct wireless communication not through the base station 10. Moreover, from now, a description proceeds using the more general term "inter-terminal communication" without using the term "D2D" in the LTE system, but the "inter-terminal communication" may be suitably replaced with the "D2D".

Here, the wireless terminal 20 in the cellular system is put under the management of the base station 10, but generally, various operation or control operations are performed based on an instruction and the like from the base station 10. For example, in a case where the through-base station communication described above is performed, the wireless terminal 20 has to be allocated a radio resource by the base station 10. From this point of view, it is considered that it is natural that the inter-terminal communication is performed to some extent under the management of the base station 10 as well. Specifically, in the cellular system in which the inter-terminal communication is possible as well, normally, the through-base station communication is performed, and in a case where a predetermined condition is satisfied, it is assumed that the base station 10 permits the wireless terminal 20 to perform the inter-terminal communication. This permission can be set to be accompanied by allocation of a radio resource for the inter-terminal communication. Accordingly, the inter-terminal communication under the management of the base station 10 is started. Moreover, as predetermined conditions for performing the inter-terminal communication, various conditions are considered. As an example, it is considered that, in a case where a load on the base station 10 is great, in order to reduce the load on the base station 10, the base station 10 causes one or several of the wireless terminals 20 under its control to make a transmission from the through-base station communication to the inter-terminal communication.

The following situation is assumed when a description is specifically provided in conformity with the LTE system. In a case where a predetermined condition for starting the inter-terminal communication is satisfied (for example, in a case where the load on the base station 10 is equal to or greater than a predetermined value), the base station 10 transmits a signal (which, for convenience, is hereinafter referred to as an inter-terminal communication starting signal) indicating that the starting of the inter-terminal communication is permitted, to two wireless terminals 20. The inter-terminal communication starting signal includes various parameters indispensable for performing the inter-terminal communication. As one of these parameters, for example, a Resource Block that is used for the inter-terminal communication is considered. The Resource Block is equivalent to a so-called partial band (subband) in the LTE system. Because the inter-terminal communication in the LTE system, as is descried above, uses an uplink frequency band, one portion of the uplink frequency band is allocated as a resource block for the inter-terminal communication. The remaining portion of the uplink frequency band can be allocated as the radio resource for a through-base station communication, or can be allocated as a radio resource for a different inter-terminal communication.

Two wireless terminals 20 that are permitted by the base station 10 to perform the inter-terminal communication start the inter-terminal communication using the resource block that is allocated by the base station 10 as one for the inter-terminal communication. The inter-terminal communication is performed using this resource block along the frequency axis direction, but can be performed using each subframe along the time axis direction. Moreover, a timing at which the inter-terminal communication is started may be set as the next subframe in which the inter-terminal communication starting signal is received, and for the timing at which the inter-terminal communication is started, information indicating a starting timing may be designated by the base station 10 using the inter-terminal communication starting signal.

Thereafter, in a case where a predetermined condition for ending the inter-terminal communication is satisfied (for example, in a case where the load on the base station 10 is smaller than the predetermined value), the base station 10 transmits a signal (which, for convenience, is hereinafter referred to as an inter-terminal communication ending signal) indicating that the inter-terminal communication is ended, to two wireless terminals 20. When receiving the inter-terminal communication ending signal, the wireless terminal 20 ends the inter-terminal communication based on the signal. Moreover, a timing at which the inter-terminal communication is ended may be set as the next subframe in which the inter-terminal communication ending signal is received, and for the timing at which the inter-terminal communication is ended, information indicating an ending timing may be designated by the base station 10 using the inter-terminal communication ending signal.

It is thought that the base station 10 and the two wireless terminals 20 operate as described above, the inter-terminal communication can be realized to some extent under the management of the base station 10. However, a problem with the scheme described above is that the management of the inter-terminal communication is still insufficient. Specifically, it is considered that it is not desirable in terms of management that two wireless terminals 20 perform the inter-terminal communication continuously (without interruption) between the starting and the ending of the inter-terminal communication that are based on the instruction from the base station 10.

A typical example of a case where this is not desirable in terms of management is described. It is considered that, in the scheme described above, as an example, the base station 10 determines the starting or the ending of the inter-terminal communication based on the load on the base station 10, but it is more desirable that this determination is based on wireless quality between the wireless terminals 20. This is because, in a case where the wireless quality is poor between the wireless terminals 20 that perform the inter-terminal communication, it is difficult to efficiently perform the inter-terminal communication. At this point, in order for the base station 10 to know the wireless quality between the wireless terminals 20, the base station 10 has to receive a report on a result of measurement of the wireless quality from the wireless terminals 20. This is because only two wireless terminals 20 can measure the wireless quality between the two wireless terminals 20 themselves and the base station 10 has the difficulty in performing the measurement.

However, there are factors to be taken into consideration when determining the ending of the inter-terminal communication. In order to perform reporting of the wireless quality between the wireless terminals 20, the wireless terminal 20 has to perform uplink transmission to the base station 10. Furthermore, in order for the base station 10 to decide a timing for ending the inter-terminal communication in a timely manner, the quality between the wireless terminals 20 has to be reported at a certain frequency. However, as described above, in the LATE system, the inter-terminal communication and the uplink transmission has to be performed in a time-division manner. Therefore, in order for the base station 10 to decide the timing for ending the inter-terminal communication in a timely manner, the uplink transmission has to be performed between the starting and the ending of the inter-terminal communication without performing the inter-terminal communication at a certain frequency. In other words, among contiguous subframes between a subframe in which the inter-terminal communication is started and a subframe in which the inter-terminal communication is ended, subframes for performing the uplink transmission without performing the inter-terminal communication are desired at a certain ratio.

Therefore, each subframe between the starting and the ending of the inter-terminal communication has to be allocated for a purpose, such as performing the inter-terminal communication or the uplink transmission. At this point, as described above, a technology in which each subframe is allocated for a purpose, such as performing the inter-terminal communication or the uplink transmission is known in the related art. However, it is considered that there is a problem as described below in the related art, and the related art is not appropriate for a situation that is assumed in the present application. The problem was newly found as a result of the inventor's in-depth technical study.

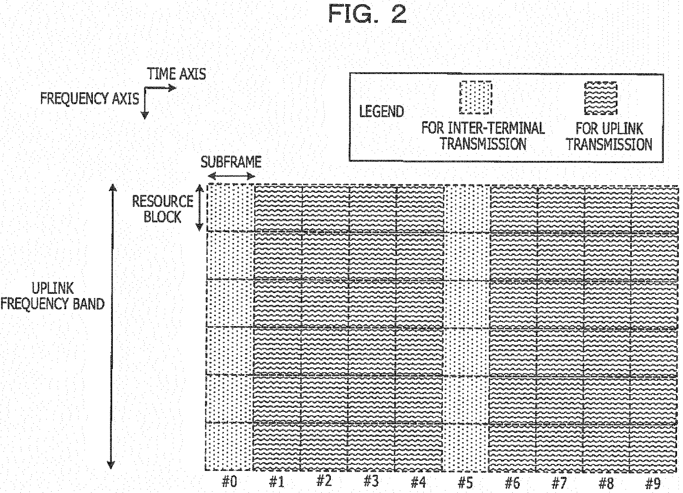

FIG. 2 illustrates an example of subframe allocation for performing the inter-terminal communication relating to the related art described above. In FIG. 2, because of limited space, only 10 subframes, that is, a 0-th subframe to a 9-th subframe in the time axis direction, are illustrated, but it is desirably noted that subframes with the same pattern may be repeated before and after the 10 subframes.

In any related art described above, as illustrated in FIG. 2, it is general that the allocation of each subframe for a purpose, such as performing the inter-terminal communication or the uplink transmission, is performed over all uplink frequency bands. In FIG. 2, as an example, a frequency band includes 6 resource blocks, but the allocation of all these resource blocks is uniformly performed for an intended purpose. This means that the allocation of the subframe for the intended purpose in the related art applied to all wireless terminals 20 (which include the wireless terminal 20 that performs through-base station 10 type communication) under the management of a certain base station 10, as well as two wireless terminals 20 that perform the inter-terminal communication under the management of a certain base station 10.

Furthermore, in the related art, the allocation of each subframe for the intended purpose is performed in a fixed manner. Then, in the related art, when a subframe ratio for the uplink transmission and a subframe ratio for the inter-terminal communication are compared with each other, the former is greater or is at the same level than the latter, and the allocation for the uplink transmission is comparatively. In FIG. 2, as an example, the 0-th subframe and the 5-th subframe are allocated for the inter-terminal communication in a fixed manner. Furthermore, the first to 4-th subframes and the 6-th to 9-th subframes are allocated for the uplink transmission in a fixed manner. It is inferred that this is because, in a case where allocation in the related art is applied to all wireless terminals 20 under the management of the base station 10, among the wireless terminals 20, only a few wireless terminals 20 perform the inter-terminal communication and most of the wireless terminals 20 perform the uplink transmission relating to the through-base station communication. In other words, it is considered because in the related art, all the wireless terminals 20 under the management of the base station 10 are targets, subframes of which the number is comparatively great are allocated for the uplink transmission that is much in demand and subframes of which the number is comparatively small are allocated for the inter-terminal communication that is less in demand.

In contrast, in a case where resource blocks (subbands) are individually allocated for the inter-terminal communication as assumed in the present application, there is a likelihood that trouble will take place in the allocation of subframes as in the related art. First, it is considered that the wireless terminal 20 that performs the inter-terminal communication has to perform the uplink transmission the given number of times as described above, but that if periodic reporting of the wireless quality or the like is performed, this is sufficient, and the ratio of the subframe for the uplink transmission does not have to be so high. Particularly, in a case where none of the two wireless terminals 20 that perform the inter-terminal communication is moved, a change in the wireless quality between the wireless terminals 20 is not that large. For this reason, it is thought that, in such a case, the frequency with which the wireless quality is reported may be low and that when it comes to the subframe for the uplink transmission, approximately one subframe for the uplink transmission every several tens to several hundreds of the subframes is sufficient. However, it is inferred that in the related art, which is described above, the number of subframes for the uplink transmission is rather greater and that there is a high likelihood that the subframe ratio for the uplink transmission will significantly exceed a subframe ratio indispensable for the reporting of the wireless quality and the like. Then, when the number of subframes for the uplink transmission is greater, the number of subframes for the inter-terminal communication is that much smaller. Accordingly, because the number of radio resources that are used for the inter-terminal communication is decreased, there is a concern that throughput (transfer efficiency) of the inter-terminal communication will be reduced.

Furthermore, it is noted that to begin with, the indispensable frequency with which the uplink transmission is performed is not fixed in the inter-terminal communication. For example, in a case where any one of the two wireless terminals 20 that perform the inter-terminal communication is not moved, and in a case where any one is moved at high speed, because the wireless quality changes to varying degreese, it is natural that the frequency with which the wireless quality is reported differs. However, in the related art, which is described above, the subframes for the uplink transmission are allocated to all wireless terminals 20 in a fixed manner, and for this reason, the frequency with the wireless quality is reported has to be the same in the two cases described above. Accordingly, a situation occurs where subframes for the uplink transmission are too many, or oppositely too few. Then, in a case where the subframes for the uplink transmission are too many (as described above), this invites a reduction in throughput of the inter-terminal communication, and in a case where the subframes for the uplink transmission are too few, there is a concern that the timely ending of the inter-terminal communication will be performed. This is because an ending timing for the inter-terminal communication is determined by the base station 10, but this determination is made based on the report on the wireless quality that is uplink-transmitted from the wireless terminal 20.

In summary, because it is stipulated that the inter-terminal communication in the LTE system uses the uplink frequency band, the inter-terminal communication and the uplink transmission have to be performed in a time-division manner. On the other hand, because the wireless terminal 20 is also requested to perform the uplink transmission while performing the inter-terminal communication, the uplink transmission has to be performed during interruption occurring at a certain frequency in the inter-terminal communication. At this point, because in the related art, as in the present application, a situation where a resource block (a subband) is individually allocated to the inter-terminal communication is not sufficiently considered, a disadvantage that configuration of the uplink transmission which is performed in the interval for the inter-terminal communication is not flexibly performed and that the frequency with which the uplink transmission is performed is too high was found. Then, in the related art, along with this disadvantage, there occurs a problem that the reduction in the throughput for the inter-terminal communication or the difficulty of ending the inter-terminal communication in a timely manner are invited and as a result, the inter-terminal communication is not effectively performed. Moreover, the description is provided above in conformity with the LTE system, but the problem described above is not limited to the LTE system, and it is desirably noted that the same wireless communication system as the LTE system also has the problem described above. Embodiments of the present invention for solving the problem are hereinafter sequentially described.

### [First Embodiment]

A first embodiment is an embodiment according to which a wireless terminal 20 has a wireless communication unit that performs uplink transmission to a wireless station using a predetermined frequency band, and a control unit that receives from the wireless station a signal indicating a timing at which the uplink transmission is discontinuously performed between when the wireless terminal 20 starts and ends inter-terminal communication with another wireless terminal 20, and that controls the wireless communication unit in such a manner that the inter-terminal communication and the uplink transmission are performed in a time-division manner based on the signal, using a frequency band that is allocated for the inter-terminal communication within the predetermined frequency band.

At this point, the base station 10 (which is also referred to as a "wireless base station") is typically considered as the wireless station described above, but the wireless station described above may be among other wireless communications that includes a third wireless terminal 20 and the like. As an example, when the base station 10 does not function properly due to a disaster or the like, a case where the wireless terminal 20 instead functions as the base station 10 is considered. According to the present embodiment and each embodiment that will be described below, a case where the wireless station is the base station 10, but it is desirably noted that no limitation to this is imposed.

A case where the invention in the present application is applied to the LTE system will be described. However, the invention in the present application is not limited to the LTE system, and it is desirably noted that it is possible that the invention in the present application is also applied to a similar wireless communication system that has the problem described above.

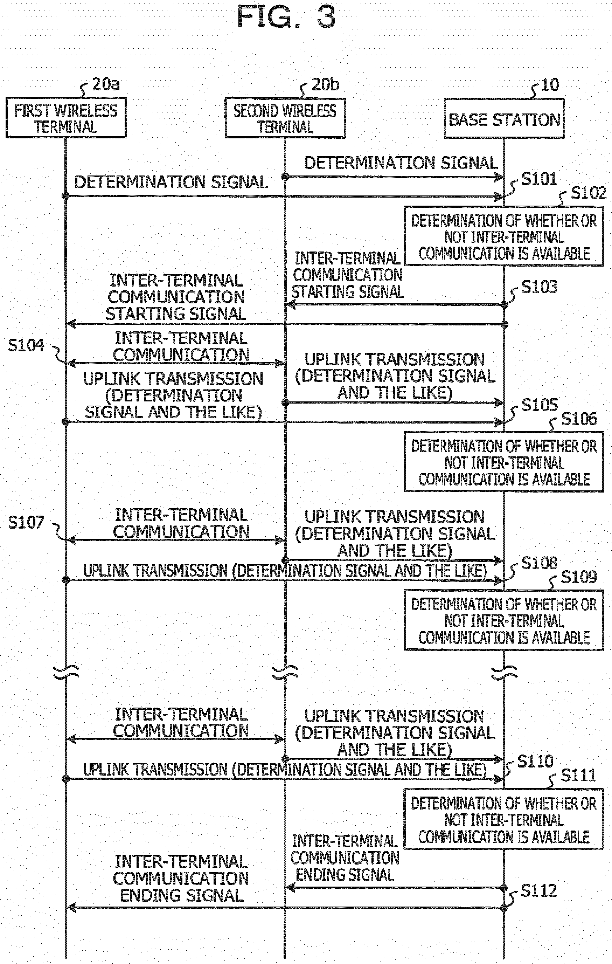

FIG. 3 is a diagram illustrating an example of a processing sequence according to the first embodiment.

A precondition for the first embodiment is described. Now, it is assumed that two wireless terminals 20, that is, a first wireless terminal 20a and a second wireless terminal 20b, are under the management (the control) of a base station 10. It is assumed that each of the first wireless terminal 20a and the second wireless terminal 20b does not have to be in communication, but is in a state of being synchronized to at least the base station 10. At this point, being synchronized means a state where the wireless terminal 20 can receive a synchronization signal or a common control signal that is transmitted by at least the base station 10 and can check details of the synchronization signal or the common control signal. Moreover, it is desirably noted that in the present application, the first wireless terminal 20a and the second wireless terminal 20b are correctively simply referred to as the wireless terminal 20.

In S101 in FIG. 3, the first wireless terminal 20a and the second wireless terminal 20b uplink-transmits to the base station 10 a signal for determining whether or not the base station 10 performs the inter-terminal communication or whether or not the base station 10 has to perform the inter-terminal communication. For convenience, this information is referred to as a determination signal. The determination signal may be transmitted through a Physical Uplink Control Channel (PUCCH) that is an uplink control channel, and may be transmitted through a Physical Uplink Shared Channel (PUSCH) that is an uplink data channel. As an example, the determination signal can be transmitted through the PUSCH as a Radio Resource Control (RRC) that is a higher-level control signal.

As an example, a determination signal that is transmitted by the first wireless terminal 20a will be described below. A determination signal that is transmitted by the second wireless terminal 20b is the same as that transmitted by the first wireless terminal 20a, and thus a description thereof is omitted.

The determination signal that is transmitted by the first wireless terminal 20a can include arbitrary information, and, for example, can include quality (radio quality) of a wireless environment in the direction from the second wireless terminal 20b to the first wireless terminal 20a. This is equivalent to received quality of a wireless signal from the second wireless terminal 20b in the first wireless terminal 20a. Furthermore, the determination signal may be set to include a path loss (channel loss) between the first wireless terminal 20a and the second wireless terminal 20b. The first wireless terminal 20a can measure or gauge the radio quality or the pass loss based on a reference signal (which is also referred to as a criterion signal or a pilot signal) that is transmitted from the second wireless terminal 20b. The base station 10 may be set to provide an instruction for a transmission timing of the determination signal in advance, and in a case where the wireless terminal 20 detects any event, the transmission timing of the determination signal may be transmitted. Furthermore, the transmission timings of the determination signal may be timings (subframes that are common to) that are common to the first wireless terminal 20a and the second wireless terminal 20b, and may be timings (subframes) that differ between the first wireless terminal 20a and the second wireless terminal 20b.

In S102 in FIG. 3, based on the determination signal that, in S101, is received from the first wireless terminal 20a and the second wireless terminal 20b, the base station 10 makes a determination of (makes a decision as to) whether or not to start the inter-terminal communication between the first wireless terminal 20a and the second wireless terminal 20b. This determination can be made based on an arbitrary criterion. For example, in a case where the radio quality between the first wireless terminal 20a and the second wireless terminal 20b, which is indicated by the determination signal, satisfies a predetermined criterion in a two-way direction, the determination is made that the inter-terminal communication is started. For example, in a case where the radio quality between the first wireless terminal 20a and the second wireless terminal 20b do not satisfy the predetermined criterion in any one of directions, the determination is made that the inter-terminal communication is not started. Furthermore, the determination in S102 may be set to be made based on information (for example, a path loss) other than the radio quality, which is included in the determination signal in S101. In addition, it goes without saying that the determination in S102 may be made based on various pieces of information (for example, the load on the base station 10) that are not included in the determination signal in S101.

In S102 in FIG. 3, as an example, it is assumed that the base station 10 makes a determination that the inter-terminal communication between the first wireless terminal 20a and the second wireless terminal 20b is started. In this case, the base station 10 further decides various parameters for the first wireless terminal 20a and the second wireless terminal 20b to perform the inter-terminal communication. For example, the base station 10 decides a resource block (a subband) that is allocated for the inter-terminal communication between the first wireless terminal 20a and the second wireless terminal 20b.

Furthermore, in a case where the determination is made that the inter-terminal communication between the first wireless terminal 20a and the second wireless terminal 20b is started, the base station 10 decides a timing for the first wireless terminal 20a and the second wireless terminal 20b to perform the uplink transmission after the inter-terminal communication is started (and before the inter-terminal communication is ended). For convenience, this timing is hereinafter referred to as an uplink transmission timing. The uplink transmission timings may be set to be common to the first wireless terminal 20a and the second wireless terminal 20b, and it is also possible that the uplink transmission timings differ between the first wireless terminal 20a and the second wireless terminal 20b. The uplink transmission timing according to the present embodiment is designated with an identifier (a number) of a subframe. At this point, the subframe is a unit for allocation of a radio resource in the time axis direction in the LTE system. One subframe is one millisecond long, and one subframe is constituted from two contiguous slots. One slot is constituted from 7 contiguous symbols, and therefore one subframe is constituted from 14 contiguous symbols. Furthermore, 10 continuous subframes constitute one frame.

The determination of the uplink transmission timing can be performed with an arbitrary method. As a typical example, the uplink transmission timing can be decided based on how much the radio quality between the first wireless terminal 20a and the second wireless terminal 20b is changed per unit time. More specifically, in a case where the change in the radio quality is large, the uplink transmission timing is configured in such a manner that the comparatively high frequency is available, and in a case where the change is small, the uplink transmission is configured in such a manner that the comparatively low frequency is available. By doing this, in a case where the movement of the wireless terminal 20 at high speed and so forth makes the radio quality unstable, the base station 10 can obtain the radio quality from the wireless terminal 20 with the comparatively high frequency and easily deal with the change in the radio quality in a corresponding manner. In contrast, in a case where the no movement of the wireless terminal 20 and so forth makes the radio quality stable, the base station 10 can obtain the radio quality from the wireless terminal 20 with the comparatively low frequency and can reduce the quantity of uplink signals.

In S103 in FIG. 3, based on the determination in S102, the base station 10 uplink-transmits a signal indicating that the inter-terminal communication is started, to the first wireless terminal 20a and the second wireless terminal 20b. For convenience, this signal is hereinafter referred to as the inter-terminal communication starting signal. Moreover, the starting of the inter-terminal communication may be set to be referred to as activation of the inter-terminal communication.

The inter-terminal communication starting signal may be transmitted through a Physical Downlink Control Channel (PDCCH) that is a downlink control channel, and may be transmitted through a Physical Downlink Shared Channel (PDSCH) that is the downlink data channel. As an example, the inter-terminal communication starting signal can be transmitted through the PDSCH as the Radio Resource Control (RRC) that is a higher-level control signal.

The inter-terminal communication starting signal includes various parameters for the first wireless terminal 20a and the second wireless terminal 20b to perform the inter-terminal communication, which is decided by base station 10 in S102. For example, the inter-terminal communication starting signal can include the resource block (the subband) that is allocated for the inter-terminal communication between the first wireless terminal 20a and the second wireless terminal 20b. Furthermore, a starting timing for the inter-terminal communication may be set to be included.

In addition, the inter-terminal communication starting signal according to the first embodiment can include information indicating the uplink transmission timing described above. At this point, the designation of the uplink transmission timing is equivalent to the designation of the subframe for the uplink transmission, but in a typical example of this method, the uplink transmission timing can be designated with an offset value indicating an initial subframe for the uplink transmission and a periodicity of the subframe for the uplink transmission. Furthermore, this offset value may be fixed in the system, and the uplink transmission timing may be designated only with the periodicity.

Moreover, at this point, it is desirably noted that, as a precondition, the subframe for the uplink transmission is discontinuous and that, as another precondition, each uplink transmission is one subframe long. More simply speaking, as a precondition, the subframe for the uplink transmission is a periodic single subframe. As described above, each wireless terminal 20 has to perform the uplink transmission between when starting and ending the inter-terminal communication, but in the uplink transmission, only information for the base station 10 to know a situation of the inter-terminal communication is transmitted. If this information is transmitted discontinuously (periodically), this is sufficient, and it is considered that it is reasonable that information, such as the precondition described above, is provided starting from comparatively small-sized information. An effect that an amount of information at the uplink transmission timing can be reduced compared with a method in which the subframe for the uplink transmission is designated is achieved. If a transmission periodicity is quantized and for example, a selection is alternatively made from 2, 5, 10, 20, 32, 40, 64, 80, 128, and 160 (which represent the number of subframes), an amount of information at the uplink transmission timing is further reduced. However, the precondition described above is not indispensable for the invention in the present application, and the uplink transmission timing in the inter-terminal communication starting signal may be designated with an arbitrary method.

In S104 in FIG. 3, based on the inter-terminal communication starting signal that is received in S103, the first wireless terminal 20a and the second wireless terminal 20b start the inter-terminal communication. The inter-terminal communication can be performed using a resource block (a subframe) that is designated with the inter-terminal communication starting signal. Furthermore, in a case where the starting timing for the inter-terminal communication is designated in the inter-terminal communication starting signal, the first wireless terminal 20a and the second wireless terminal 20b start the inter-terminal communication according to the starting timing. Moreover, the subframes in which the inter-terminal communication is performed include a subframe in which the transmission from the first wireless terminal 20a to the second wireless terminal 20b is performed and a subframe in which the transmission from the second wireless terminal 20b to the first wireless terminal 20a is performed, but this allocation may be able to be arbitrarily decided.

Moreover, in the present application, a scheme for the inter-terminal communication or the like does not matter. For example, the inter-terminal communication may be performed using any of a synchronous communication scheme and an asynchronous communication scheme. In a case where the inter-terminal communication is performed in the synchronous communication scheme, because processing is performed that establishes synchronization between the wireless terminals 20, the inter-terminal communication can be started. In this case, with inter-terminal communication starting signal, information indispensable for providing the synchronization (for establishing a radio link) between the wireless terminals 20 may be set to be notified.

In S105 in FIG. 3, based on the uplink transmission timing that is designated with the inter-terminal communication starting signal which is received in S103, the first wireless terminal 20a and the second wireless terminal 20b performs initial uplink transmission after starting the inter-terminal communication. For example, as described above, in a case where the uplink transmission timing is designated with the offset value indicating the initial frame for the uplink transmission and the periodicity of the subframe for the uplink transmission, the timing in S105 is a subframe that is specified with the offset value. Moreover, the signal that is transmitted in S105 may be transmitted through the PUCCH, and may be transmitted through the PUSCH. As an example, the signal that is transmitted in S105 can be transmitted through the PUSCH as the RRC signal that is the higher-level control signal.

The signal that is transmitted in S105 includes arbitrary information, but typically, can be set to be the same determination signal as in S101. As described above, after starting the inter-terminal communication, the base station 10 has to decide the timing for ending the inter-terminal communication in a timely manner. For this reason, it is considered that it is desirable that the base station 10 periodically receives the determination signal, as a determination material for the decision, from the wireless terminal 20. Moreover, in S105 in FIG. 3, as an example, both of the first wireless terminal 20a and the second wireless terminal 20b perform the uplink transmission, but only any one of the wireless terminals 20 may perform the uplink transmission and none of the wireless terminals 20 may perform the uplink transmission. For example, at each timing for the uplink transmission, it is possible that the first wireless terminal 20a and the second wireless terminal 20b alternately perform the uplink transmission.

In S106 in FIG. 3, based on the determination signal that, in S105, is received from the first wireless terminal 20a and the second wireless terminal 20b, the base station 10 makes a determination of (makes a decision as to) whether or not to end the inter-terminal communication between the first wireless terminal 20a and the second wireless terminal 20b. This determination can be made based on an arbitrary criterion, but for example, in the case where the radio quality between the first wireless terminal 20a and the second wireless terminal 20b do not satisfy the predetermined criterion in any one of directions, the determination is made that the inter-terminal communication is ended. On the other hand, in a case where the radio quality between the first wireless terminal 20a and the second wireless terminal 20b satisfy the predetermined criterion in a two-way direction, the determination is made that the inter-terminal communication is not ended (continues). Furthermore, the determination in S106 may be set to be made based on information (for example, the path loss) other than the radio quality, which is included in the determination signal in S105, or on information (for example, the load on the base station 10) that is not included in the determination signal in S105.

In S106 in FIG. 3, as an example, it is assumed that the base station 10 makes a determination that the inter-terminal communication between the first wireless terminal 20a and the second wireless terminal 20b is not ended. In this case, the base station 10 particularly does not have to provide a notification and the like to the first wireless terminal 20a and the second wireless terminal 20b.

Next, in S107, the first wireless terminal 20a and the second wireless terminal 20b perform the inter-terminal communication. Because S107 may be performed in the same manner as the S104, and thus a description thereof is omitted.

In S108 in FIG. 3, the first wireless terminal 20a and the second wireless terminal 20b perform the second uplink transmission after starting the inter-terminal communication. For example, as described above, in a case where uplink transmission timing information is constituted from the offset value indicating the initial frame for the uplink transmission and the periodicity of the subframe for the uplink transmission, the timing in S108 is a subframe that appears the periodicity later than the subframe in S105. Because S108 may be performed in the same manner as the S105, and thus a description thereof is omitted.

Next, in S109, based on the determination signal that, in S108, is received from the first wireless terminal 20a and the second wireless terminal 20b, the base station 10 makes a determination of (makes a decision as to) whether or not to end the inter-terminal communication between the first wireless terminal 20a and the second wireless terminal 20b. Because S109 may be performed in the same manner as the S106, and thus a description thereof is omitted. In S109 in FIG. 3, as an example, it is also assumed that the base station 10 makes a determination that the inter-terminal communication between the first wireless terminal 20a and the second wireless terminal 20b is not ended.

Subsequently, in the same manner as in S107 to S109, the first wireless terminal 20a and the second wireless terminal 20b repeatedly perform the inter-terminal communication and the uplink transmission, and each time the inter-terminal communication and the uplink transmission are repeatedly performed, the base station 10 determines whether or not to end the inter-terminal communication, based on the uplink transmission.

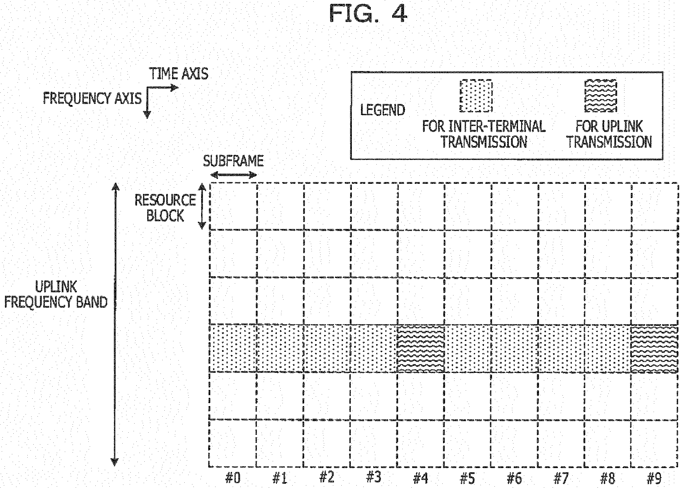

FIG. 4 illustrates an example of a constitution of a subframe relating to a resource block that is allocated for the inter-terminal communication according to the first embodiment. In FIG. 4, because of limited space, only 10 subframes, that is, a 0-th subframe to a 9-th subframe in the time axis direction, are illustrated, but it is desirably noted that subframes with the same pattern may be repeated before and after the 10 subframes.

In an example in FIG, 4, among 6 resource blocks that constitute the uplink frequency band, one (the 4-th resource block from top in FIG. 4) is allocated as a resource block for the inter-terminal communication. Then, only the resource block for the inter-terminal communication is allocated for a purpose, such as performing the inter-terminal communication or the uplink transmission. At this point, 5 resource blocks other than the resource block for the inter-terminal communication is not restricted to the purpose for which only the resource block for the inter-terminal communication is allocated. For this reason, the base station 10 can allocate 5 resource blocks other than the resource block for the inter-terminal communication, as the wireless resource for the through-base station communication, or as the wireless resource for a different inter-terminal communication.

In the example in FIG. 4, a case where a periodicity of the uplink transmission timing is 5 subframes is illustrated. In FIG. 4, as an example, 0-th to 3-rd subframes and 5-th to 8-th subframes are allocated for the inter-terminal communication. Furthermore, a 4-th subframe to a 9-th subframe are allocated for the uplink transmission. It is desirably noted that this allocation is not fixed and variable (dynamic) allocation is possible with the inter-terminal communication starting signal.

In the example in FIG. 4, approximately 80% (=4/5) of the resource blocks that are allocated can be used for the inter-terminal communication between starting and ending the inter-terminal communication, and the inter-terminal communication can be efficiently performed. If the periodicity of the uplink transmission timing is further increased, it is also possible that the inter-terminal communication is performed more efficiently.

Turning to the description that is provided referring to FIG. 3, it is assumed that in S110, the first wireless terminal 20a and the second wireless terminal 20b transmit the determination signal to the base station 10. Then, as an example, it is assumed that, in S111, based on the determination signal in S110, the base station 10 makes a determination that the inter-terminal communication between the first wireless terminal 20a and the second wireless terminal 20b is ended.

At this time, In S112 in FIG. 3, based on the determination in S111, the base station 10 downlink-transmits a signal indicating that the inter-terminal communication is ended, to the first wireless terminal 20a and the second wireless terminal 20b. For convenience, this signal is hereinafter referred to as the inter-terminal communication ending signal. Moreover, the starting of the inter-terminal communication may be set to be referred to as deactivation of the inter-terminal communication.

The inter-terminal communication ending signal may be transmitted through the PDCCH and may be transmitted through the PDSCH. As an example, the inter-terminal communication ending signal can be transmitted through the PDSCH as the RRC signal that is the higher-level control signal. Furthermore, the inter-terminal communication ending signal may include a parameter relating to the ending of the inter-terminal communication. As an example of this parameter, the ending timing for the inter-terminal communication can be given.

When receiving the inter-terminal communication ending signal from the base station 10, the first wireless terminal 20a and the second wireless terminal 20b ends the inter-terminal communication. In a case where the ending timing for the inter-terminal communication is included in the inter-terminal communication ending signal, based on the ending timing, the first wireless terminal 20a and the second wireless terminal 20b end the inter-terminal communication. In a case where the first wireless terminal 20a and the second wireless terminal 20b perform subsequent communication after ending the inter-terminal communication, this subsequent communication is performed through the base station 10 based on a normal scheme for cellular communication.

According to the first embodiment described above, when the inter-terminal communication is started, a suitable uplink transmission timing can be individually configured for the inter-terminal communication. For this reason, the problem in the related art is solved that it is difficult to flexibly configure the timing for the uplink transmission that is performed in the interval for the inter-terminal communication and thus the uplink transmission timing is configured in such a manner that higher frequency than desired is available. Accordingly, according to the first embodiment, the throughput of the inter-terminal communication can be secured and the timely ending of the inter-terminal communication can be realized. Therefore, according to the first embodiment, an effect that the inter-terminal communication is effectively performed, which is not possible in the related art, is achieved.

### [Second Embodiment]

A second embodiment is equivalent to a specific concept of the first embodiment, and specifically realizes more effective inter-terminal communication, even based on a constitution of the wireless terminal 20.

Because the second embodiment is of the specific concept of the first embodiment, what distinguishes the second embodiment from the first embodiment will be described in detail below in an emphasizing manner. It is desirably noted that a description according to the second embodiment that overlaps with the description according to the first embodiment is suitably omitted.

First, in preparation for providing the description according to the second embodiment, a hardware constitution of a circuit portion of the wireless terminal 20, which processes a wireless signal is described. Moreover, it is assumed that a precondition in the present embodiment is Frequency Division Duplex (FDD) that uses frequency bands which differ between uplink and downlink.

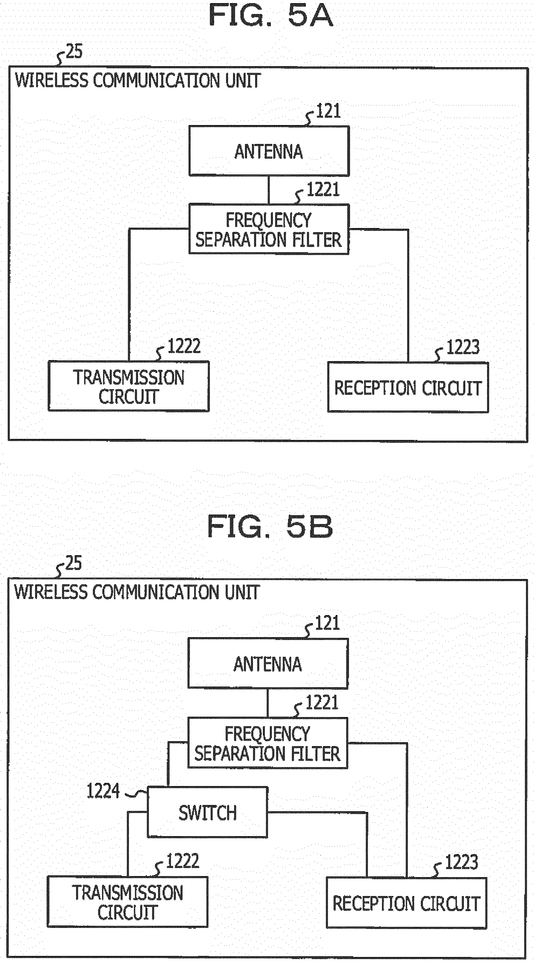

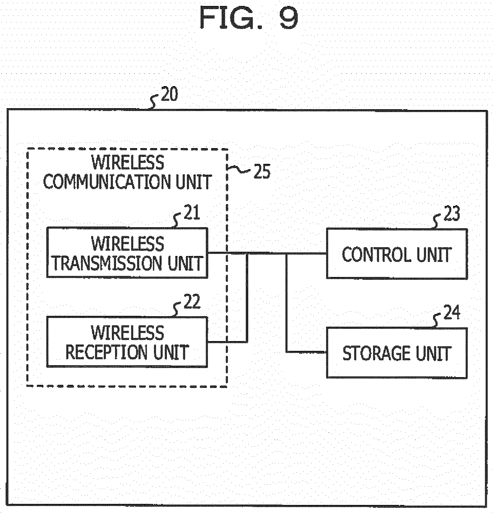

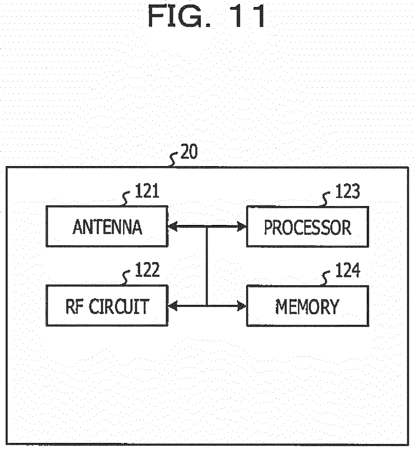

FIG. 5A illustrates a hardware constitution of a wireless communication unit 25 of a general wireless terminal 20 that does not perform the inter-terminal communication, which processes the wireless signal. The wireless communication unit 25 in FIG. 5A includes an antenna 121, a frequency separation filter 1221, a transmission circuit 1222, and a reception circuit 1223. Moreover, the wireless communication unit 25 in FIG. 5A corresponds to the wireless communication unit 25 in FIG. 9, which will be described below. Furthermore, the antenna 121 in FIG. 5A corresponds to the antenna 121 in FIG. 11, and the frequency separation filter 1221, the transmission circuit 1222, and the reception circuit 1223, which are in FIG. 5A, correspond to an RF circuit 122 in FIG. 11.

In FIG. 5A, it is assumed that the antenna 121 serves for both of transmission and reception. In this case, in the antenna 121, an uplink signal and a downlink signal interfere with each other. However, in a case where the FDD is a precondition, as is the case with the present embodiment, because frequency bands that differ between the uplink signal and the downlink signal are used, it is possible that these frequency bands are electrically separated with the frequency separation filter 1221 (duplexer) that is connected to the antenna 121. Accordingly, the transmission circuit 1222 can process the uplink signal, and the reception circuit 1223 can process the downlink signal.

In contrast, FIG. 5B illustrates a hardware constitution of the wireless communication unit 25 of the wireless terminal 20 that performs the inter-terminal communication, which processes the wireless signal. The wireless communication unit 25 in FIG. 5B includes a switch 1224 in addition to the antenna 121, the frequency separation filter 1221, the transmission circuit 1222, and the reception circuit 1223. Moreover, the wireless communication unit 25 in FIG. 5B also corresponds to the wireless communication unit 25 in FIG. 9, which will be described below. Furthermore, the antenna in FIG. 5B corresponds to the antenna 121 in FIG. 11, and the frequency separation filter 1221, the transmission circuit 1222, the reception circuit 1223, and the switch 1224, which are in FIG. 5A, corresponds to the RF circuit 122 in FIG. 11.

As described so far, the inter-terminal communication in the LTE system uses the uplink frequency band. On the other hand, because generally, the inter-terminal communication is bidirectional communication, for this purpose, reception processing as well as transmission processing is desired. In order to realize this, as illustrated in FIG. 5B, the wireless terminal 20 that performs the inter-terminal communication is constituted in such a manner that signals in the uplink frequency band, which result from the separation by the frequency separation filter 1221, are further mechanically separated, with switching by the switch 1224, into the transmission circuit 1222 and the reception circuit 1223.

At this point, because the switching by the switch 1224 is not electric processing as in the frequency separation filter 1221, switching time (gap) is desired. The switching time is infinitesimal, and as the switching time, a time that is approximately one symbol (14 symbols are equivalent to one subframe) is also possible, but at the switching time, it is difficult for the wireless terminal 20 to perform both of the transmission and reception using the uplink frequency band. For this reason, there is a likelihood that efficiency of the inter-terminal communication will depend on how this switching time is allocated to a subframe. The second embodiment was contrived from this point of view.

Processing sequence according to the second embodiment is the same as the processing sequence according to the first embodiment, which is illustrated in FIG. 3, and thus a description thereof is omitted.

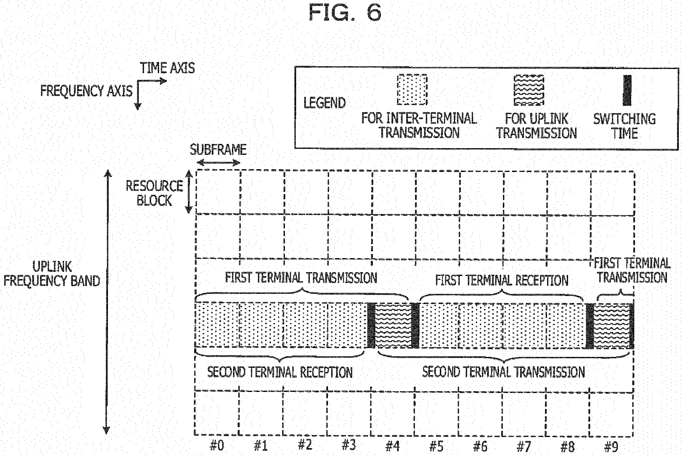

FIG. 6 illustrates an example of a constitution of a subframe relating to a resource block that is allocated for the inter-terminal communication according to the second embodiment. In FIG. 6, because of limited space, only 10 subframes, that is, a 0-th subframe to a 9-th subframe, are illustrated, but it is desirably noted that subframes with the same pattern may be repeated before and after the 10 subframes.

FIG. 6 corresponds to FIG. 4 according to the first embodiment, and as an example, illustrates a case where the periodicity of the uplink transmission timing is 5 subframes. In FIG. 6, as an example, 0-th to 3-rd subframes and 5-th to 8-th subframes are allocated for the inter-terminal communication. Furthermore, a 4-th subframe to a 9-th subframe are allocated for the uplink transmission. It is desirably noted that this allocation is not fixed and variable (dynamic) allocation is possible with the inter-terminal communication starting signal.

At this point, in FIG. 6, among 14 symbols that constitute each subframe for the uplink transmission, the first and last symbols are used as switching times described above. In addition, in FIG. 6, the subframe for the inter-terminal communication is divided into two in a communication direction. Specifically, as an example, it is assumed that 0-th to 3-rd subframes are subframes for the inter-terminal communication from the first wireless terminal 20a to the second wireless terminal 20b. Furthermore, it is assumed that 5-th to 8-rd subframes are subframes for the inter-terminal communication from the second wireless terminal 20b to the first wireless terminal 20a. In this manner, it is assumed that the subframe for the inter-terminal communication from the first wireless terminal 20a to the second wireless terminal 20b and the subframe for the inter-terminal communication from the second wireless terminal 20b to the first wireless terminal 20a, between both of which the subframe for the uplink transmission is interposed, appear alternately.

As illustrated in FIG. 6, after constituting the subframes, in the first wireless terminal 20a, switching between transmission and reception is performed in each of the last symbol of the 4-th subframe and the first symbol of the 9-th subframe. On the other hand, in the first wireless terminal 20a, the switching between transmission and reception is not performed in each of the first symbol of the 4-th subframe and the last symbol of the 9-th subframe. In the same manner, in the second wireless terminal 20b, the switching between transmission and reception is performed in each of the first symbol of the 4-th subframe and the last symbol of the 9-th subframe. On the other hand, in the second wireless terminal 20b, the switching between transmission and reception is not performed in each of the last symbol of the 4-th subframe and the first symbol of the 9-th subframe.

By doing this, the first wireless terminal 20a performs the transmission in the 0-th to 4-th subframes and the 9-th subframe, and performs the reception in 5-th to 8-th subframes, and may perform two-times switching (the switching by the switch 1224) between the transmission and reception within 10 subframes. In the same manner, the second wireless terminal 20b performs the transmission in the 4-th to 9-th subframes and performs the reception in 0-th to 3-rd subframes, and may perform two-times switching (the switching by the switch 1224) between the transmission and reception within 10 subframes. In this manner, it is possible that any one of the first wireless terminal 20a and the second wireless terminal 20b efficiently switch between the inter-terminal communication and the uplink transmission, by the same number of times of switching as in the subframe for the uplink transmission.

Furthermore, the switching time is configured for the subframe for the uplink transmission, not for the subframe for the inter-terminal communication, as illustrated in FIG. 6, and thus the inter-terminal communication can be efficiently performed. On the other hand, the uplink transmission at the time of performing the inter-terminal communication is limited to the reporting of the radio quality and the like, as described above, and the size of information is comparatively small. For this reason, it is considered that although the switching time, as illustrated in FIG. 6, is provided to the subframe for the uplink transmission, this does not cause a problem.

In addition, in the LTE system, a sounding reference signal that is a reference signal for uplink scheduling is mapped to the last symbol of each subframe in the uplink. However, in the wireless terminal 20 that performs the inter-terminal communication, because the uplink scheduling is not desired, the sounding reference signal does not have to be transmitted. However, it is considered that the last symbol of the subframe for the uplink transmission is configured as the switching time for the switching between the transmission and reception, and thus the symbol that does not originally have to be transmitted is effectively utilized, thereby increasingly contributing to efficient inter-terminal communication.

According to the second embodiment described above, when the inter-terminal communication is started, a suitable uplink transmission timing can be individually configured for the inter-terminal communication. For this reason, the problem that arises in the related art, that is, the problem that it is difficult to flexibly configure the timing for the uplink transmission that is performed in the interval for the inter-terminal communication and thus the uplink transmission timing is configured in such a manner that higher frequency than desired is available is solved. Accordingly, according to the second embodiment, the throughput of the inter-terminal communication can be secured and the timely ending of the inter-terminal communication can be realized. Therefore, according to the second embodiment, an effect that the inter-terminal communication is effectively performed, which is not possible in the related art, is achieved.

### [Network Constitution of the Wireless Communication System according to Each Embodiment]

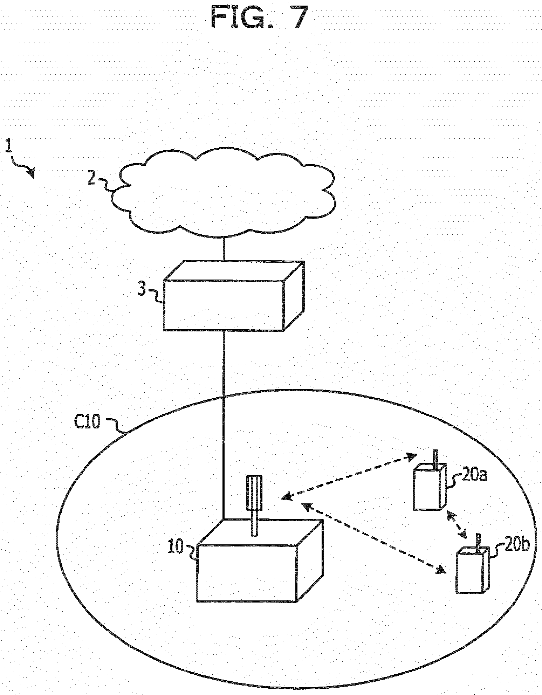

Next, a network constitution of a wireless communication system 1 according to each embodiment is described referring to FIG. 7. As illustrated in FIG. 7, the wireless communication system 1 has the base station 10 and the wireless terminal 20. Moreover, two wireless terminals 20, that is, the wireless terminal 20a and the wireless terminal 20b are illustrated in FIG. 7, but it goes without saying that this is only an example. The base station 10 forms a cell C10. The wireless terminal 20 is present within the cell C10. Moreover, it is desirably noted that in the present application, the base station 10 is referred to as a "transmission station," and the wireless terminal 20 is referred to as a "reception station."

The base station 10 is connected to a network device 3 through a wired connection, and the network device 3 is connected to a network 2 through the wired connection. The base station 10 is provided in such a manner that it is possible that the base station 10 transmits and receives data or control information to and from a different base station 10 through the network device 3 and the network 2.

The base station 10 may be made up of separate devices. One has a function of performing wireless communication with the wireless terminal 20, and the other has a function of performing digital signal processing and a control function. In this case, the device equipped with the wireless communication function is referred to as a Remote Radio Head (RRH), and the device equipped with the digital signal processing and the control function is referred to as a Base Band Unit (BBU). The RRH may be installed in a state of protruding from the BBU, and an optical fiber and the like may provide a connection between the RRH and the BBU in the wired manner. Furthermore, the base stations 10 may include not only a macro base station 10 and small-sized base stations 10 (including a micro base station 10 and a femto base station 10, and the like), such as a pico base station 10, but also variously-sized base stations 10. Furthermore, in a case where a relay station is used that relays wireless communication between the base station 10 and the wireless terminal 20, the relay station (transmission to and reception from the wireless terminal 20 and control of the transmission and reception) may also be set to be included in the base station 10 in the present application.

On the other hand, the wireless terminal 20, as illustrated in FIG. 7, performs communication with the base station 10 using the wireless communication. Furthermore, in FIG. 7, as an example, the wireless terminal 20a and the wireless terminal 20b perform the inter-terminal communication. In this manner, the wireless terminal 20 performs the inter-terminal communication with another wireless terminal 20.

The wireless terminal 20 may be a wireless terminal 20, such as a portable telephone, a smartphone, a Personal Digital Assistant (PDA), a Personal Computer, and various apparatuses or devices (a sensing device or the like) that are equipped with the wireless communication function. Furthermore, in the case where the relay station is used that relays the wireless communication between the base station 10 and the wireless terminal 20, the relay station (transmission to and reception from the base station 10 and control of the transmission and reception) may also be set to be included in the wireless terminal 20 in the present application.

The network device 3, for example, includes a communication unit and a control unit. These constituent elements are connected to one another in such a manner that it is possible that a signal or data is input and output in a one-way direction or in a two-way direction. The network device 3, for example, is realized as a gateway. As a hardware constitution of the network device 3, for example, the communication unit is realized as an interface circuit, and the control unit is realized as a processor and a memory.

Moreover, specific aspects of distribution or integration of constituent elements of the base station 10 and the wireless terminal 20 are not limited to aspects of the first embodiment. A constitution can be provided in which all or some of the constituent elements are distributed or integrated functionally or physically in arbitrary units according to various loads, an operating condition, or the like. For example, a connection to the memory as an external device of the base station 10 and the wireless terminal 20 may be set to be established through a network or a cable.

### [Functional Constitution of Each Device in the Wireless Communication System according to Each Embodiment]

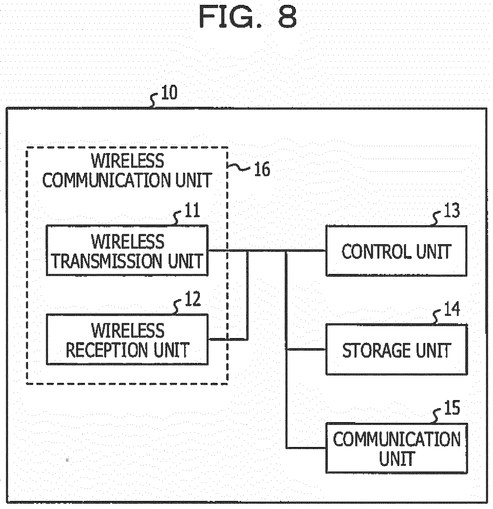

Next, referring to FIGs. 8 and 9, a functional constitution of each device in a wireless communication system according to each embodiment is described. Moreover, it is desirably noted that, as described above, when the term wireless terminal 20 is used, the wireless terminals 20 include the first wireless terminal 20a and the second wireless terminal 20b according to each embodiment described above.

FIG. 8 is a functional block diagram illustrating an example of a constitution of the base station 10. As illustrated in FIG. 8, the base station 10 includes, for example, a wireless transmission unit 11, a wireless reception unit 12, a control unit 13, a storage unit 14, and a communication unit 15. These constituent components are connected to one another in such a manner that it is possible that a signal or data is input and output in a one-way direction or in a two-way direction. Moreover, the wireless transmission unit 11 and the wireless reception unit 12 are collectively referred to as a wireless communication unit 16.

The wireless transmission unit 11 transmits a data signal or a control signal through an antenna using the wireless communication. Moreover, the antenna may be shared for transmission and reception. The wireless transmission unit 11 transmits a wireless signal (a downlink wireless signal) to the wireless terminal 20. The wireless signal that is transmitted by the wireless transmission unit 11 can include arbitrary user data or control information (on which coding, modulation, or the like is performed), a criterion signal, or the like, which is destined for the wireless terminal 20.

As a specific example of the wireless signal that is transmitted by the wireless transmission unit 11, each wireless signal (indicated by an arrow in the drawings) that is transmitted by each base station 10 to the wireless terminal 20 in FIG. 3 is given. The wireless signals that are transmitted by the wireless transmission unit 11 are not limited to these, and include all wireless signals that are transmitted by the base station 10 to the wireless terminal 20 according to each embodiment described above and a modification example.

The wireless reception unit 12 receives a data signal or a control signal through an antenna using the wireless communication. The wireless reception unit 12 receives a wireless signal (an uplink wireless signal) from the wireless terminal 20. The wireless signal that is received by the wireless reception unit 12 can include arbitrary user data or control information (on which the coding, the modulation, or the like is performed), a criterion signal, or the like, which is transmitted by the wireless terminal 20.

As a specific example of the wireless signal that is received by the wireless reception unit 12, the wireless signal (indicated by an arrow in the drawings) that is received by the base station 10 from the wireless terminal 20 in FIG. 3 is given. The wireless signals that are received by the wireless reception unit 12 are not limited to these, and include all wireless signals that are received by the base station 10 from the wireless terminal 20 according to each embodiment described above and the modification example.

The control unit 13 outputs data or control information that is transmitted to the wireless terminal 20, to the wireless transmission unit 11. The control unit 13 inputs data or control information that is received from the wireless terminal 20, from the wireless reception unit 12. The control unit 13 inputs and outputs data, control information, a program, and the like between the control unit 13 itself and the storage unit 14 that will be described below. The control unit 13 inputs and outputs data or control information that is transmitted and received to and from the other party, such as a different base station 10, between the control unit 13 itself and the communication unit 15 that will be described below. In addition to these, the control unit 13 performs various control operations in the base station 10.

As specific examples of processing that is controlled by the control unit 13, control for each signal (indicated by an arrow in the drawings) that is transmitted and received by the base station 10 in FIG. 3, and control for each processing operation (indicated by a rectangle in the drawings) that is performed by the base station 10 are given. Processing operations that are controlled by the control unit 13 are not limited to these, and include types of control relating to all processing operations that are performed by the base station 10 according to each embodiment described above and the modification example.

Various pieces of information, such as data, control information, a program, are stored in the storage unit 14. The various pieces of information that are stored in the storage unit 14 include all pieces of information that are stored in the base station 10 according to each embodiment described above and the modification example.

The communication unit 15 transmits and receives data or control information to and from the other party, such as a different base station 10, through a wired signal (possibly, a wireless signal) and the like. As specific examples of the wired signal and the like that is transmitted and received by the communication unit 15, a wired signal and the like that the base station 10 transmits and receives to and from the other party that is the different base station 10 are given. The wired signal and the like that are transmitted and received by the communication unit 15 are not limited to these, and include all wired signals and the like that, in each embodiment and the modification example described above, the base station 10 transmits and receives to and from the other party that is the different base station 10 or the like.

Moreover, the base station 10 may transmit and receive a wireless signal to and from a wireless communication device (for example, a different base station 10 or a relay station) other than the wireless terminal 20 through the wireless transmission unit 11 or the wireless reception unit 12.

FIG. 9 is a functional block diagram illustrating an example of the constitution of the wireless terminal 20. As illustrated in FIG. 9, the wireless terminal 20 includes, for example, a wireless transmission unit 21, a wireless reception unit 22, a control unit 23, and a storage unit 24. These constituent components are connected to one another in such a manner that it is possible that a signal or data is input and output in a one-way direction or in a two-way direction. Moreover, the wireless transmission unit 21 and the wireless reception unit 22 are collectively referred to as a wireless communication unit 25.

The wireless transmission unit 21 transmits a data signal or a control signal through an antenna using the wireless communication. Moreover, the antenna may be shared for the transmission and reception. The wireless transmission unit 21 transmits the wireless signal (the uplink wireless signal) to the base station 10. The wireless signal that is transmitted by the wireless transmission unit 21 can include arbitrary user data or control information (on which the coding, the modulation, or the like is performed), a criterion signal, or the like, which is destined for the base station 10.

Furthermore, the wireless transmission unit 21 can transmit the wireless signal to another wireless terminal 20 (the inter-terminal communication). The wireless signal that is transmitted by the wireless transmission unit 21 can include arbitrary user data or control information (on which the coding, the modulation, or the like is performed), a criterion signal, or the like, which is destined for the other wireless terminal 20.

As specific examples of the wireless signal that is transmitted by the wireless transmission unit 21, each wireless signal (indicated by an arrow in the drawings) that is transmitted by the wireless terminal 20 to the base station 10 in FIG. 3, and each wireless signal that is transmitted by the wireless terminal 20 to the other wireless terminal 20 are given. The pieces of wireless signal that are transmitted by the wireless transmission unit 21 are not limited to these, and include all wireless signals that are transmitted by the wireless terminal 20 to the base station 10 according to each embodiment described above and the modification example, and all wireless signals that are transmitted by the wireless terminal 20 to the other wireless terminal 20.

The wireless reception unit 22 receives a data signal or a control signal through an antenna using the wireless communication. The wireless reception unit 22 receives the wireless signal (the downlink wireless signal) from the base station 10. The wireless signal that is received by the wireless reception unit 22 can include arbitrary user data or control information (on which the coding, the modulation, or the like is performed), a criterion signal, or the like, which is transmitted by the base station 10.

Furthermore, the wireless reception unit 22 can receive the wireless signal from the other wireless terminal 20 (the inter-terminal communication). The wireless signal that is transmitted by the wireless reception unit 22 can include arbitrary user data or control information (on which the coding, the modulation, or the like is performed), a criterion signal, or the like, from the other wireless terminal 20.

As specific examples of the wireless signal that is received by the wireless reception unit 22, each wireless signal (indicated by an arrow in the drawings) that is received by the wireless terminal 20 from the base station 10 in FIG. 3, and each wireless signal that is received by the wireless terminal 20 from the other wireless terminal 20 are given. The wireless signal that are received by the wireless reception unit 22 are not limited to these, and include all wireless signals that are received by the wireless terminal 20 from the base station 10 according to each embodiment described above and the modification example, and all wireless signals that are received by the wireless terminal 20 from the other wireless terminal 20.

The control unit 23 outputs data or control information that is transmitted to the base station 10, to the wireless transmission unit 21. The control unit 23 inputs data or control information that is received from the base station 10, from the wireless reception unit 22. The control unit 23 inputs and outputs data, control information, a program, and the like between the control unit 23 itself and the storage unit 24 that will be described below. In addition to these, the control unit 23 performs various control operations in the wireless terminal 20.

As specific examples of processing that is controlled by the control unit 23, control for each signal (indicated by an arrow in the drawings) that is transmitted and received by the wireless terminal 20 in FIG. 3, and control for each processing operation (indicated by a rectangle in the drawings) that is performed by the wireless terminal 20 are given. Processing operations that are controlled by the control units 23 are not limited to these, and include types of control relating to all processing operations that are performed by the wireless terminal 20 according to each embodiment described above and the modification example.

Various pieces of information, such as data, control information, a program, are stored in the storage unit 24. The various pieces of information that are stored in the storage unit 24 include all pieces of information that are stored in the wireless terminal 20 according to each embodiment described above and the modification example.

Moreover, the wireless terminal 20 may transmit and receive a wireless signal to and from a wireless communication device other than the base station 10 through the wireless transmission unit 21 or the wireless reception unit 22.

### [Hardware Constitution of Each Device in the Wireless Communication System according to Each Embodiment]

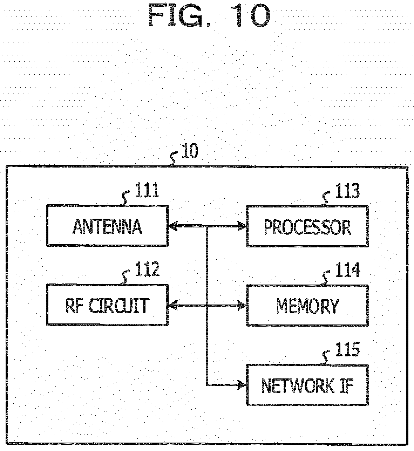

A hardware constitution of each device in the wireless communication system according to each embodiment and each modification example is described referring to FIGs. 10 and 11. Moreover, it is desirably noted that, as described above, when the term wireless terminal 20 is used, the wireless terminals 20 include the first wireless terminal 20a and the second wireless terminal 20b according to each embodiment described above.

FIG. 10 is a diagram illustrating an example of a hardware constitution of the base station 10. As illustrated in FIG. 10, the base station 10 has, for example, a Radio Frequency (RF) circuit 112 including an antenna 111, a processor 113, a memory 114, and a network interface (IF) 115, as hardware constituent elements. These constituent elements are connected to one another in such a manner that it is possible that various signals or pieces of data are input and output through a bus.

The processor 113 is, for example, a Central Processing Unit (CPU) or a Digital Signal Processor (DSP). In the present application, the processor 113 may be realized as a digital electronic circuit. For example, as the digital electronic circuits, an Application-Specific Integrated Circuit (ASIC), a Field-Programing Gate Array (FPGA), a Large Scale Integration (LSI), and the like are given.

The memory 114 includes at least any one of a Random Access Memory (RAM), for example, such as a Synchronous Dynamic Random Access Memory (SDRAM), a Read Only Memory (ROM), and a flash memory. A program, control information, or data is stored in the memory 114. In addition, the base station may include an auxiliary storage device (a hard disk or the like) and the like, which are not illustrated.

A correspondence between a functional constitution of the base station 10 that is illustrated in FIG. 8 and a hardware constitution of the base station 10 that is illustrated in FIG. 10 is described. The wireless transmission unit 11 and the wireless reception unit 12 (or the wireless communication unit 16), for example, are realized as an RF circuit 112, or as the antenna 111 and the RF circuit 112. The control unit 13 is realized as, for example, the processor 113, the memory 114, and a digital electronic circuit or the like that is not illustrated. The storage unit 14 is realized as, for example, the memory 114. The communication unit 15 is realized as, for example, a network IF 115.

FIG. 11 is a diagram illustrating an example of a hardware constitution of the wireless terminal 20. As illustrated in FIG. 11, the wireless terminal 20 includes, for example, a Radio Frequency (RF) circuit 122 including an antenna 121, a processor 123, and a memory 124, as hardware constituent elements. These constituent elements are connected to one another in such a manner that it is possible that various signals or pieces of data are input and output through a bus.

The processor 123 is, for example, a Central Processing Unit (CPU) or a Digital Signal Processor (DSP). In the present application, the processor 123 may be realized as a digital electronic circuit. For example, as the digital electronic circuits, an Application-Specific Integrated Circuit (ASIC), a Field-Programing Gate Array (FPGA), a Large Scale Integration (LSI), and the like are given.

The memory 124 includes at least any one of a Random Access Memory (RAM), for example, such as a Synchronous Dynamic Random Access Memory (SDRAM), a Read Only Memory (ROM), and a flash memory. A program, control information, or data is stored in the memory 124.

A correspondence between a functional constitution of the wireless terminal 20 that is illustrated in FIG. 9 and a hardware constitution of the wireless terminal 20 that is illustrated in FIG. 11 is described. The wireless transmission unit 21 and the wireless reception unit 22 (or the wireless communication unit 25), for example, are realized as an RF circuit 122, or as the antenna 121 and the RF circuit 122. The control unit 23 is realized as, for example, the processor 123, the memory 124, and a digital electronic circuit or the like that is not illustrated. The storage unit 24 is realized as, for example, the memory 124.

### Reference Signs List

- 1: WIRELESS COMMUNICATION SYSTEM
- 2: NETWORK
- 3: NETWORK DEVICE
- 10: BASE STATION
- C10: CELL
- 20: WIRELESS TERMINAL

## Claims

1. A wireless terminal comprising:
a wireless communication unit that performs uplink transmission to a wireless station using a predetermined frequency band; and
a control unit that receives from the wireless station a signal indicating a timing at which the uplink transmission is discontinuously performed between when the wireless terminal starts and ends inter-terminal communication with another wireless terminal, and that controls the wireless communication unit in such a manner that the inter-terminal communication and the uplink transmission are performed in a time-division manner based on the signal, using a frequency band that is allocated for the inter-terminal communication within the predetermined frequency band.

2. The wireless terminal according to claim 1,
wherein the timing is a periodic single unit of interval.

3. The wireless terminal according to claim 2,
wherein the unit of interval is a subframe that complies with Long Term Evolution (LTE) standards.

4. The wireless terminal according to claim 2 or 3,
wherein the signal includes information indicating a timing at which the uplink transmission is performed for the first time within a timing at which the uplink transmission is discontinuously performed after the inter-terminal communication is started, and information indicating the periodicity.

5. The wireless terminal according to claim 1,
wherein the control unit controls the wireless communication unit in such a manner that the inter-terminal communication from the wireless terminal to the other wireless terminal and the inter-terminal communication from the other wireless terminal to the wireless terminal are alternately performed between each of the timings at which the uplink transmission is discontinuously performed.

6. The wireless terminal according to claim 1,
wherein the timings at which the uplink transmission is discontinuously performed include a timing at which switching between transmission and reception is performed using the allocated frequency band.

7. The wireless terminal according to claim 6,
wherein the timing is a periodic frame, and
wherein the timing at which the switching between the transmission and reception is performed is the first or last symbol of the subframe.

8. A wireless station comprising:
a wireless communication unit that performs uplink reception from a wireless terminal using a predetermined frequency band; and
a control unit that transmits a signal indicating a timing at which the uplink reception is discontinuously performed between when the wireless terminal starts and ends inter-terminal communication with another wireless terminal, and that controls the wireless terminal and the other wireless terminal in such a manner that the inter-terminal communication and the uplink transmission are performed in a time-division manner based on the signal, using a frequency band that is allocated for the inter-terminal communication within the predetermined frequency band.

9. A wireless communication system comprising:
a wireless terminal;
another wireless terminal; and
a wireless station,
wherein the wireless terminal includes
a wireless communication unit that performs uplink transmission to the wireless station using a predetermined frequency band, and
a control unit that receives from the wireless station a signal indicating a timing at which the uplink transmission is discontinuously performed between when the wireless terminal starts and ends inter-terminal communication with the other wireless terminal, and that controls the wireless communication unit in such a manner that the inter-terminal communication and the uplink transmission are performed in a time-division manner based on the signal, using a frequency band that is allocated for the inter-terminal communication within the predetermined frequency band.

10. A wireless communication method that is used by a wireless terminal that performs uplink transmission to a wireless station using a predetermined frequency band, the wireless communication method comprising:
receiving from the wireless station a signal indicating a timing at which the uplink transmission is discontinuously performed between when the wireless terminal starts and ends inter-terminal communication with another wireless terminal; and
controlling the wireless communication unit in such a manner that the inter-terminal communication and the uplink transmission are performed in a time-division manner based on the signal, using a frequency band that is allocated for the inter-terminal communication within the predetermined frequency band.
